# EUROPÄISCHE PATENTSCHRIFT

(11) **EP 2 052 912 B1**
(45) Veröffentlichungstag und Bekanntmachung des Hinweises auf die Patenterteilung: **24.09.2014**
(21) Anmeldenummer: 08167485.5
(22) Anmeldetag: 24.10.2008
(51) Int. Cl.: B60Q 1/14

(54) **Kraftfahzeug mit einer Schaltungsanordnung zum Steuern des Schaltens von Fernlicht bei Kraftfahrzeugscheinwerfern**
Motor vehicle with a switching assembly for controlling the switching of full beam in motor vehicle headlamps
Véhicule automobile avec un circuit destiné à la commande de la commutation des phares de route de véhicule automobile

(30) Priorität: 26.10.2007 DE 102007051273
(43) Veröffentlichungstag der Anmeldung: 29.04.2009
(73) Patentinhaber: Hella KGaA Hueck & Co., 59552 Lippstadt (DE)
(72) Erfinder: Rodenkirchen, Florian, 33611, Bielefeld (DE); Schwarz, Sergej, 59557, Lippstadt (DE)

(56) Entgegenhaltungen:
- WO-A1-01/92060
- WO-A1-03/045734
- DE-A1- 10 340 346
- DE-A1- 19 523 262
- DE-A1-102006 011 301

## Beschreibung

Die Erfindung betrifft Kraftfahrzeuge mit einer Schaltungsanordnung zum Erzeugen von Steuersignalen zur Steuerung des Schaltens von Fernlicht bei Kraftfahrzeugscheinwerfern in Abhängigkeit von der Beleuchtung in der Umgebung des Kraftfahrzeuges, wobei die Schaltungsanordnung zumindest einen Sensor umfassend eine oder mehrere Fotozellen oder bevorzugt einen oder mehrere Fototransistoren aufweist.

Aus der Druckschrift mit der Veröffentlichungsnummer US 2,907,920 ist ein Scheinwerferdimmerschaltkreis bekannt, der Fotozellen aufweist, mit welchen das Licht eines entgegenkommenden oder vorausfahrenden Fahrzeugs erfasst werden kann um entsprechend die Frontscheinwerfer abzublenden. Damit wird eine Blendung eines entgegenkommenden oder vorausfahrenden Verkehrs vermieden.

Der Schaltkreis beziehungsweise die Schaltungsanordnung, wie sie in der Druckschrift offenbart ist, weist eine Reihe von Relais, Röhrenverstärkern und dergleichen auf. Der Aufbau der Schaltungsanordnung ist aufwändig und insbesondere aufgrund der Verwendung der Röhrenverstärker wenig robust. Aufgrund der Wahl der inzwischen nicht mehr zeitgemäßen Bauelemente ist die Zeit über die Schaltungsanordnung, wie sie in der Druckschrift US 2,907,920 offenbart ist, hinweggegangen. Auch aus dem Dokument WO 01/92060 A1 ist eine gattungsgemäße Schaltungsanordnung bekannt, welche zur Steuerung des Schaltens von Fernlicht verwendet werden kann. Diese weist zwei Fotodioden auf, die in unterschiedliche Richtungen, nämlich nach unten und nach oben ausgerichtet sein können, um die Umgebungshelligkeit eines Fahrzeugs zu erkennen. Mit der in dem Dokument beschriebenen Fernlichtsteuerung soll Einfahrt in einen Tunnel, beim Auftreten einer Gewitterwolke usw. entlastet werden. Die Erfassung von vorrausfahrenden oder entgegenkommenden Fahrzeugen und deren Entblendung wird in dem Dokument nicht behandelt.

In jüngerer Zeit wurden andere Vorrichtungen entwickelt, mit denen ein automatisches Abblenden bei Kraftfahrzeugscheinwerfern erreicht werden kann. Diese Vorrichtungen weisen Kamerasysteme auf, deren Bildsignale mittels komplexer Algorithmen verarbeitet werden, um verschiedene Lichtquellen in dem Kamerabild zu klassifizieren und zu erkennen. In Abhängigkeit von den erkannten Lichtquellen werden dann Steuersignale zum Steuern der Kraftfahrzeugscheinwerfer erzeugt.

Auch diese Systeme sind insbesondere aufgrund der aufwändigen Bildverarbeitung kostenintensiv. Dieses ist unter anderem auch auf eine hohe Anzahl von elektronischen Bauelementen und Bauteilen zurückzuführen.

Hier setzt die vorliegende Erfindung an.

Der vorliegenden Erfindung liegt die Aufgabe zugrunde, eine Schaltungsanordnung zum Erzeugen von Steuersignalen zur Steuerung des Schaltens von Fernlicht bei Kraftfahrzeugscheinwerfern vorzuschlagen, welches einerseits auf preiswerte Sensoren zurückgreift und andererseits eine robuste und einfache Verarbeitung der Sensorsignale ermöglicht.

Die erfindungsgemäße Aufgabe wird dadurch gelöst, dass die Schaltungsanordnung mehrere erste Sensoren für sichtbares Licht aufweist, wobei die ersten Sensoren lichtempfindliche Flächen aufweisen, die senkrecht zu einer ersten Ebene, die der horizontalen Ebene eines Kraftfahrzeugs entspricht, und jeweils um einen Winkel mit einem Betrag von 10° bis 15°, vorzugsweise um 12° zueinander geneigt ausgerichtet sind wobei die ersten Sensoren (1) in der horizontalen Ebene des Kraftfahrzeugs angeordnet und so ausgerichtet sind, dass sichtbares Licht von vorausfahrenden oder entgegenkommenden Fahrzeugen erfassbar ist.

Erfindungsgemäß kann die Schaltungsanordnung mindestens eine zum Erzeugen von Steuersignalen in Abhängigkeit von zumindest einem der Sensoren erzeugten Signale geeignet und eingerichtete Mikroprozessorsteuerung (Mikrocontroller) aufweisen.

Die erfindungsgemäßen Schaltungsanordnungen sind durch die Verwendung von Mikroprozessorsteuerungen robuster als die in dem Stand der Technik beschriebenen Schaltungsanordnungen mit Röhrenverstärkern und Relaisschaltungen. Auch durch die Verwendung von mehreren Sensoren, die unterschiedlich ausgerichtet sind, ist eine sicherere Erfassung von Informationen über die Beleuchtung der Umgebung möglich. Zugleich ermöglicht die Verwendung von Fotodioden, Fotoelementen oder Fototransistoren einen einfachen Aufbau, der eine aufwändige Bildverarbeitung, wie sie bei Kamerasystemen erforderlich ist, entbehrlich macht. Der Vorteil der erfindungsgemäßen Schaltungsanordnungen liegt somit einerseits in ihrer Robustheit und andererseits in ihrer Einfachheit, was sich auch durch die Verwendung von preiswerten Bauelementen bemerkbar macht.

Gemäß der Erfindung kann eine erfindungsgemäße Schaltungsanordnung einen oder mehrere zweite Sensoren aufweisen, wobei die zweiten Sensoren lichtempfindliche Flächen aufweisen, die senkrecht zu einer zweiten Ebene ausgerichtet ist, die um 35° bis 55°, vorzugsweise um 45° gegenüber der ersten Ebene geneigt ist. Während die ersten Sensoren bei der Verwendung in einem Kraftfahrzeug in der horizontalen Ebene des Kraftfahrzeugs angeordnet sind, um Licht von vorausfahrenden oder entgegenkommenden Fahrzeugen zu erfassen, kann mit dem zweiten Sensor oder mit den zweiten Sensoren das Licht von Straßenlaternen oder dergleichen erfasst werden, d. h. Licht, welches von oben auf die Straße eingestrahlt wird. Sowohl das von oben auf das Fahrzeug eingestrahlte Licht, als auch das Licht eines entgegenkommenden oder vorausfahrenden Fahrzeugs kann das Abblenden des Kraftfahrzeugscheinwerfers erforderlich machen.

Die ersten Sensoren können einen Öffnungswinkel von +/- 6,5° bezogen auf eine Achse senkrecht zur lichtempfindlichen Fläche haben, während der Öffnungswinkel der zweiten oder des zweiten Sensors vorzugsweise ca. +/- 30°, mindestens jedoch +/- 20° beträgt.

Gemäß der Erfindung kann die Schaltungsanordnung elektronische Mittel zum Anpassen von Signalen aufweisen, die zum Anpassen von an Ausgängen der Sensoren anliegenden Signale an die Mikroprozessorsteuerung geeignet und eingerichtet sind. Im einfachsten Fall handelt es sich bei diesen Mitteln um Mittel zur Pegelanpassung der Ausgangssignale an die Eingänge der Mikroprozessorsteuerung.

Ebenso können elektronische Mittel vorgesehen sein, mit denen die Empfindlichkeit und/oder die Dynamik der Sensoren eingestellt werden kann.

Anhand der beigefügten Zeichnungen wird die Erfindung nachfolgend näher erläutert. Dabei zeigt:

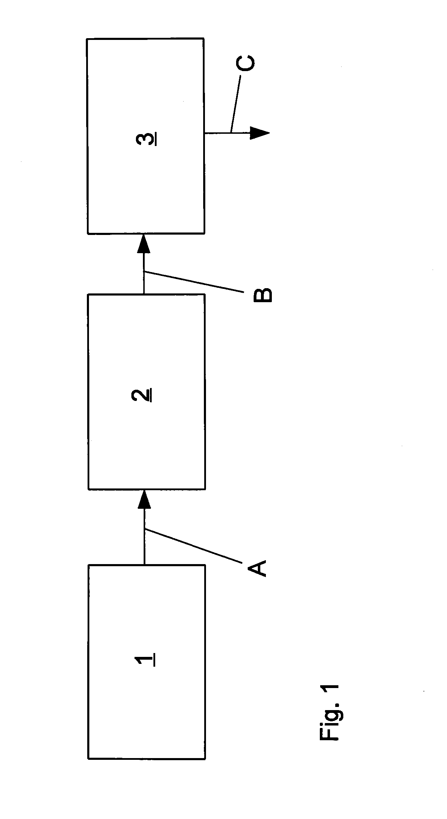

- Fig. 1: ein Blockschaltbild einer erfindungsgemäßen Schaltungsanordnung und
- Fig. 2: eine Anordnung von Sensoren bildenden Fototransistoren.

Eine erfindungsgemäße Schaltungsanordnung weist drei Blöcke 1, 2, 3 auf. In einem ersten Block 1 sind Sensoren angeordnet, deren Ausgangssignale A an einen zweiten Block 2 gegeben werden. Dieser zweite Block 2 umfasst Mittel zum Anpassen der Ausgangssignale der Sensoren 1 an eine Mikroprozessorsteuerung 3, welche den dritten Block bildet. Die Ausgangssignale der Sensoren 1 werden durch die elektronischen Mittel zum Anpassen bearbeitet oder umgeformt, um sie in eine Form zu bringen, die von der Mikroprozessorsteuerung 3 verarbeitet werden können. Im einfachsten Fall wird lediglich der Pegel des Signals auf ein für die Mikroprozessorsteuerung 3 verarbeitbares Maß gebracht. Darüber hinaus könnte auch eine Analog-DigitalWandlung erfolgen, sofern diese nicht in den Sensoren 1 selbst erfolgt.

Gleichzeitig können im zweiten Block 2 Mittel zum Einstellen der Sensoren 1 vorgesehen sein, mit denen insbesondere die Empfindlichkeit und/oder die Dynamik der Sensoren 1 eingestellt werden kann.

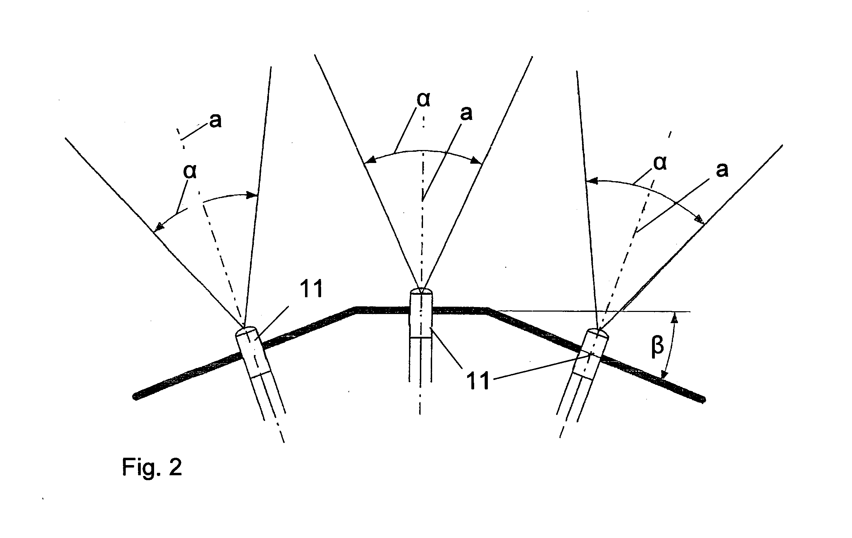

Die Sensoren 1 umfassen jeweils einen Fototransistor 11, die unterschiedlich ausgerichtet sind, um Licht aus unterschiedlichen Richtungen erfassen zu können. Eine erste Gruppe von Sensoren 1 ist in einer ersten Ebene angeordnet. Diese Sensoren 1 sind in der Fig. 2 dargestellt. Die erste Ebene ist von der Zeichnungsebene gebildet. In der ersten Ebene sind die Fototransistoren um jeweils einen Winkel β zueinander geneigt angeordnet. Dadurch kann Licht erfasst werden, was aus unterschiedlichen Richtungen in der ersten Ebene eingestrahlt wird. Jeder der Fototransistoren 11 hat einen Öffnungswinkel α, aus dessen Richtung er Lichtstrahlen erfassen kann und in ein Ausgangssignal umwandeln kann. Der Winkel α erstreckt sich gleichmäßig um eine Achse a, die senkrecht auf einer lichtempfindlichen Fläche der Fototransistoren 11 steht. Die äußere Grenze des Öffnungsbereichs der Fototransistoren schließt mit der Achse a einen Winkel von ca. 6,5° ein.

Die erste Ebene, in welcher die erste Gruppe der Fototransistoren angeordnet ist, entspricht der horizontalen Ebene eines Kraftfahrzeugs. Durch die Ausrichtung der Fototransistoren 11 in dieser Ebene kann das Licht von vorausfahrenden oder entgegenkommenden Fahrzeugen erfasst werden.

In den Figuren ist eine zweite Ebene nicht dargestellt, die zur ersten Ebene um 45° geneigt ist, und in welcher wenigstens ein weiterer zweiter Sensor angeordnet ist. Dieser zweite Sensor ist so ausgerichtet, dass die lichtempfindliche Ebene senkrecht zu dieser zweiten Ebene liegt und von oben auf das Kraftfahrzeug einstrahlendes Licht erfassen kann, welches beispielsweise von Straßenlaternen abgestrahlt wird.

Sobald mit einem der Sensoren Licht empfangen wird und ein entsprechendes Ausgangssignal durch den Sensor, d. h. den Fototransistor 11 erzeugt wird, bewirkt die Mikroprozessorsteuerung 3 ein Abblenden der Kraftfahrzeugscheinwerfer oder aber ein Absenken der Hell-Dunkel-Grenze, um entgegenkommende oder vorausfahrende Fahrzeuge nicht zu blenden oder im Stadtverkehr die Kraftfahrzeugscheinwerfer grundsätzlich abzublenden.

### Bezugszeichenliste

- 1: erster Block
- 2: zweiter Block
- 3: Mikroprozessorsteuerung
- 11: Fototransistor
- A: Ausgangssignale
- α: Öffnungswinkel
- β: Winkel
- a: Achse
- A: Signale
- C: Steuersignale

## Patentansprüche

1. Kraftfahrzeug mit einer Schaltungsanordnung zum Erzeugen von Steuersignalen zur Steuerung des Schaltens von Fernlicht bei Kraftfahrzeugscheinwerfern in Abhängigkeit von der Beleuchtung in der Umgebung des Kraftfahrzeugs, wobei die Schaltungsanordnung mindestens einen ersten Sensor (1) für sichtbares Licht umfassend eine oder mehrere Fotoelemente, Fotodioden oder Fototransistoren (11) aufweist,
**dadurch gekennzeichnet, dass**
die Schaltungsanordnung mehrere erste Sensoren (1) für sichtbares Licht aufweist, wobei die ersten Sensoren (1) lichtempfindliche Flächen aufweisen, die senkrecht zu einer ersten Ebene, die der horizontalen Ebene des Kraftfahrzeugs entspricht, und jeweils um einen Winkel (β) mit einem Betrag von 10° bis 15°, vorzugsweise um 12° zueinander geneigt ausgerichtet sind, wobei die ersten Sensoren (1) in der horizontalen Ebene des Kraftfahrzeugs angeordnet und so ausgerichtet sind, dass sichtbares Licht von vorausfahrenden oder entgegenkommenden Fahrzeugen erfassbar ist.

2. Kraftfahrzeug nach Anspruch 1, **dadurch gekennzeichnet, dass** dieSchaltungsanordnung mindestens eine zum Erzeugen von Steuersignalen (C) in Abhängigkeit von zumindest einem der Sensoren erzeugten Signalen (A) geeignete und eingerichtete Mikroprozessorsteuerung (3) aufweist.

3. Kraftfahrzeug nach Anspruch 2, **dadurch gekennzeichnet, dass** die Schaltungsanordnung einen oder mehrere zweite Sensoren aufweist, wobei die zweiten Sensoren (1) lichtempfindliche Flächen aufweisen, die senkrecht zu einer zweiten Ebene ausgerichtet ist, die um 35° bis 55°, vorzugsweise um 45° gegenüber der ersten Ebene geneigt ist.

4. Kraftfahrzeug nach Anspruch 2 oder 3, **dadurch gekennzeichnet, dass** die ersten Sensoren (1) einen Öffnungswinkel (α) von +/- 6,5° bezogen auf eine Achse (a) senkrecht zur lichtempfindlichen Fläche haben.

5. Kraftfahrzeug nach Anspruch 3, **dadurch gekennzeichnet, dass** die zweiten Sensoren einen Öffnungswinkel von mindestens 20°, vorteilhaft von 30° bezogen auf eine Achse senkrecht zur lichtempfindlichen Fläche haben.

6. Kraftfahrzeug nach einem der Ansprüche 1 bis 5, **dadurch gekennzeichnet, dass** die Schaltungsanordnung elektronische Mittel (2) zum Anpassen von Signalen aufweist, die zum Anpassen von an Ausgängen der Sensoren anliegenden Signalen (A) an die Mikroprozessorsteuerung (3) geeignet und eingerichtet sind.

7. Kraftfahrzeug nach einem der Ansprüche 1 bis 6, **dadurch gekennzeichnet, dass** die Schaltungsanordnung elektronische Mittel (3) zum Einstellen aufweist, die zum Einstellen der Sensoren (1), insbesondere der Empfindlichkeit und/oder der Dynamik der Sensoren (1) geeignet und eingerichtet sind.

## Claims

1. Motor vehicle with a circuit arrangement for generating control signals for controlling the high beam switching in motor vehicle headlamps as a function of the lighting in the motor vehicle's surroundings, wherein the circuit arrangement has at least one first sensor (1) for visible light comprising one or more photoelements, photodiodes, or phototransistors (11),
**characterized in that**
the circuit arrangement has several first sensors (1) for visible light, wherein the first sensors (1) have light-sensitive surfaces that are oriented at an angle to each other by an angle (ß) with a magnitude of 10° to 15°, preferably 12°, and are perpendicular to a first plane that corresponds to the horizontal plane of the motor vehicle, wherein the first sensors (1) are arranged in the horizontal plane of the motor vehicle and oriented so that visible light can be detected from vehicles driving in front of the vehicle or in the oncoming lane.

2. Motor vehicle according to Claim 1, **characterized in that** the circuit arrangement has at least one microprocessor controller (3) that is suitable for and designed to generate control signals (C) as a function of at least one of the signals (A) generated by the sensors.

3. Motor vehicle according to Claim 2, **characterized in that** the circuit arrangement has one or more second sensors, wherein the second sensors (1) have light-sensitive surfaces that are perpendicular to a second plane that is angled by 35° to 55°, preferably by 45°, relative to the first plane.

4. Motor vehicle according to Claim 2 or 3, **characterized in that** the first sensors (1) have an opening angle (α) of +/-6.5° with respect to an axis (a) perpendicular to the light-sensitive surface.

5. Motor vehicle according to Claim 3, **characterized in that** the second sensors have an opening angle of at least 20°, preferably 30°, with respect to an axis perpendicular to the light-sensitive surface.

6. Motor vehicle according to one of Claims 1 to 5, **characterized in that** the circuit arrangement has electronic means (2) for signal adaptation, wherein these means are suitable for and designed to adapt the signals (A) applied to outputs of the sensors to the microprocessor controller (3).

7. Motor vehicle according to one of Claims 1 to 6, **characterized in that** the circuit arrangement has electronic means (3) for adjustments, wherein these means are suitable for and designed to adjust the sensors (1), in particular, the sensitivity and/or dynamic response of the sensors (1).

## Revendications

1. Véhicule à moteur avec circuit visant à générer des signaux de commande pour commander la commutation de feux de route sur les phares du véhicule en fonction de l'éclairage de l'environnement du véhicule, ledit circuit présentant au moins un premier capteur (1) pour la lumière visible comprenant une ou plusieurs cellules photovoltaïques, des photodiodes ou des phototransistors (11),
et **caractérisé en ce que**
le circuit présente plusieurs premiers capteurs (1) pour la lumière visible, lesdits premiers capteurs (1) possédant des surfaces photosensibles, qui perpendiculaires à un premier niveau correspondant au niveau horizontal du véhicule, sont orientées respectivement d'un angle (ß) d'inclinaison d'un montant de 10° à 15°, et de préférence de 12° l'une vers l'autre, les premiers capteurs (1) étant agencés dans le niveau horizontal du véhicule et alignés de telle sorte que la lumière visible de véhicules se trouvant devant ou circulant en sens inverse puisse être saisie.

2. Véhicule selon la revendication 1, **caractérisé en ce que** le circuit présente au moins une commande par micro-processeurs (3) configurée et adaptée pour générer des signaux de commande (C) en fonction des signaux (A) générés par au moins un des capteurs.

3. Véhicule selon la revendication 2, **caractérisé en ce que** le circuit présente un ou plusieurs deuxièmes capteurs, lesdits deuxièmes capteurs (1) présentant des surfaces photosensibles, qui sont orientées perpendiculairement à un deuxième niveau, incliné de 35° à 55°, de préférence à 45°, par rapport au premier niveau.

4. Véhicule selon la revendication 2 ou 3, **caractérisé en ce que** les premiers capteurs (1) ont un angle d'ouverture (α) de +/- 6,5° en fonction d'un axe (a) perpendiculaire à la surface photosensible.

5. Véhicule selon la revendication 3, **caractérisé par le fait que** les deuxièmes capteurs ont un angle d'ouverture d'au moins 20°, de préférence de 30° en fonction d'un axe perpendiculaire à la surface photosensible.

6. Véhicule selon l'une des revendications 1 à 5, **caractérisé en ce que** le circuit présente des éléments électroniques (2) permettant d'adapter des signaux, qui sont configurés et appropriés pour adapter des signaux (A) présents aux sorties des capteurs à la commande par micro-processeurs (3).

7. Véhicule selon l'une des revendications 1 à 6, **caractérisé en ce que** le circuit présente des éléments électroniques (3) pour le réglage, qui sont configurés et appropriés pour régler les capteurs (1), en particulier la sensibilité et/ou la dynamique des capteurs (1).
